# EUROPEAN PATENT APPLICATION

(11) **EP 2 202 678 A1**
(43) Date of publication of application: **30.06.2010**
(21) Application number: 08172660.6
(22) Date of filing: 22.12.2008
(51) Int. Cl.: G06Q 10/00

(54) **Method and system for managing data record for a calendar appointment in a computing device**

(71) Applicant: Research In Motion Limited, Waterloo, Ontario N2L 3W8 (CA)
(72) Inventor: Hardy, Michael Thomas, Waterloo Ontario N2T 2J8 (CA); Runstedler, Christopher James, Cambridge Ontario N1S 2Z4 (CA); Jain, Rohit Rocky, Waterloo Ontario N2T 2T8 (CA)
(74) Representative: MERH-IP Matias Erny Reichl Hoffmann

(57) **Abstract**

A method and system for data record management is provided. In an embodiment, a method is provided for updating a data record representing a calendar appointment. The method comprises steps for inputting and saving data representing linked appointments that are associated with data representing base appointments.

## Description

The present specification relates generally to computer science and more specifically relates to a method and system for data record management in a computing device.

The proliferation of computing devices is corresponding with ever increasing demands for functionality, which is further increasing demand for elegant and efficient management of data records within those devices and over communication networks that connect those devices with servers. The applications that are maintained and executable by such devices interact with large and complex databases, which contain unique records on different devices. Certain records maintained in those databases are often maintained in a disjointed fashion, hampering efficient operation of the device and consuming precious network bandwidth.

### GENERAL

An aspect of this specification may provide a method for managing a data record comprising: receiving a request respective to a data record for a calendar appointment; the request comprising at least one of creating and modifying the data record; receiving data representing base appointment details for the data record; receiving data representing linked appointment details for the data record; storing the base appointment details and the linked appointment details in the data record.

Another aspect of this specification may provide a method for controlling an computing device: receiving a request to generate the graphical interface; determining a time and date range to be used in generating the graphical interface; retrieving a data record corresponding to the time and date range; the data record comprising base appointment details and linked appointment details; and generating the graphical interface; the graphical interface comprising a representation of the base appointment details and the linked appointment details.

### BRIEF DESCRIPTION OF THE DRAWINGS

Figure 1 is a schematic representation of a system for managing records in a computing device.

Figure 2 is a block diagram of the device shown in Figure 1.

Figure 3 is a representation of a data structure for a calendar appointment record that can be stored in non-volatile storage of the device of Figure 2.

Figure 4 shows a variation on the data structure of Figure 3.

Figure 5 shows a flowchart depicting a method of data record management.

Figure 6 shows an exemplary graphical interface representation of a day view of a calendar entry generated on the display of the device of Figure 2.

Figure 7 shows an exemplary representation of a graphical interface for receiving data representing a calendar appointment for storage in a calendar appointment record.

Figure 8 shows the graphical interface of Figure 7 wherein exemplary data has been inputted into the graphical interface.

Figure 9 shows a flowchart depicting a method of generating a graphical interface.

Figure 10 shows a graphical interface of Figure 6 after performance of the method in Figure 9.

Figure 11 shows the graphical interface of Figure 8 wherein a data has been modified from the exemplary data shown in Figure 8.

Figure 12 shows the graphical interface of Figure 10 after performance of the method in Figure 9 based on the data provided according to Figure 11.

Figure 13 is a schematic representation of a system for managing records in a computing device.

Figure 14 shows a flowchart depicting another method of data record management.

Figure 15 shows a graphical interface to implement method the method in Figure 14.

### DESCRIPTION OF PREFERRED EMBODIMENTS

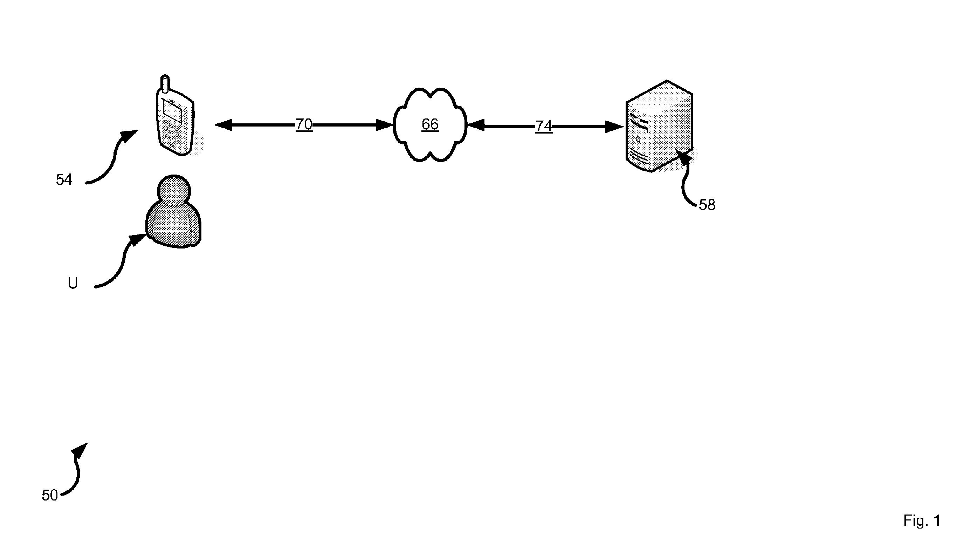

Referring now to Figure 1, a system for managing records in a computing device is indicated generally at 50. In a present embodiment system 50 comprises a first computing device in the form of a computing device 54 and a second computing device in the form of a server 58. A network 66 interconnects each of the foregoing components. A first link 70 interconnects computing device 54 with network 66. A second link 74 interconnects server 58 with network 66.

Computing device 54 can be any type of electronic device that can be used in a self-contained manner and to interact with content available on network 66. Computing device 54 is operated by a user U. Interaction includes displaying of information on computing device 54 as well as to receive input at computing device 54 that can in turn be sent back over network 66. Computing device 54 will be explained in greater detail below.

Server 58 can be based on any well-known server environment including a module that houses one or more central processing units, volatile memory (e.g. random access memory), persistent memory (e.g. hard disk devices) and network interfaces to allow server 58 to communicate over network 66. For example, server 58 both can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 58 is contemplated.

It should now be understood that the nature of network 66 and links 70 and 74 associated therewith is not particularly limited and are, in general, based on any combination of architectures that will support interactions between computing device 54 and server 58. In a present embodiment network 66 itself includes the Internet as well as appropriate gateways and backhauls to links 70 and 74. Accordingly, the links 70 and 74 between network 66 and the interconnected components are complementary to functional requirements of those components.

More specifically, in a present embodiment system 50 includes link 70 between computing device 54 and network 66. Link 70 is based, in a present embodiment, on core mobile network infrastructure (e.g. Global System for Mobile communications ("GSM"); Code Division Multiple Access ("CDMA"); CDMA 2000; 3G) or on wireless local area network ("WLAN") infrastructures such as the Institute for Electrical and Electronic Engineers ("IEEE") 802.11 Standard (and its variants) or Bluetooth or the like or hybrids thereof. Note that in an exemplary variation of system 50 it is contemplated that computing device 54 could be other types of computing devices whereby link 70 is a wired connection. System 50 also includes link 74 which can be based on a T1, T3, 03 or any other suitable wired or wireless connection between server 58 and network 66.

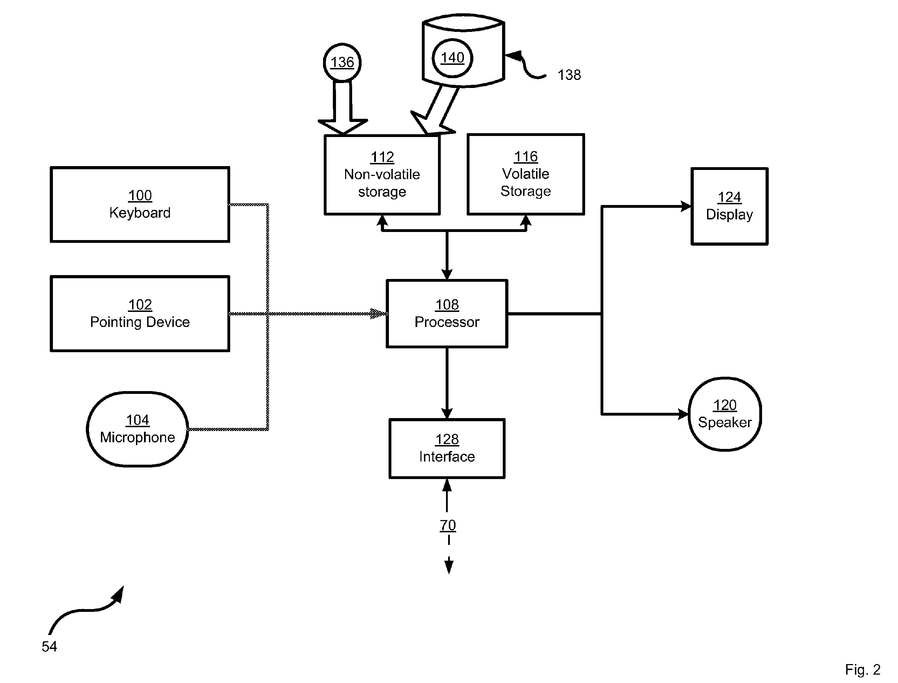

In a present embodiment, computing device 54 is a mobile electronic device with the combined functionality of a personal digital assistant, a cell phone, and an email paging device. Many well known cellular telephone models, or variants thereof, are suitable for the present embodiment. Referring now to Figure 2, a schematic block diagram of device 54 is shown. It should be emphasized that the structure in Figure 2 is purely exemplary, and contemplates a device that be used for both wireless voice (e.g. telephony) and wireless data (e.g. email, web browsing, text) communications. Device 54 includes a plurality of input devices which in a present embodiment includes a keyboard 100, a pointing device 102, and a microphone 104. Pointing device 102 can be implemented as a track wheel, trackball or the like. Other input devices, such as a touch screen are also contemplated. Input from keyboard 100, pointing device 102 and microphone 104 is received at a processor 108. Processor 108 is configured to communicate with a non-volatile storage unit 112 (e.g. Erase Electronic Programmable Read Only Memory ("EEPROM"), Flash Memory) and a volatile storage unit 116 (e.g. random access memory ("RAM")). Programming instructions that implement the functional teachings of device 54 as described herein are typically maintained, persistently, in non-volatile storage unit 112 and used by processor 108 which makes appropriate utilization of volatile storage 116 during the execution of such programming instructions. Variants on device 54 can include a laptop computer or a desktop computer.

Processor 108 in turn is also configured to control a speaker 120 and a display 124. Processor 108 also contains a network interface 128, which is implemented in a present embodiment as a radio configured to communicate over link 70. In general, it will be understood that interface 128 is configured to correspond with the network architecture that defines link 70. It should be understood that in general a wide variety of configurations for device 54 are contemplated.

In a present embodiment, device 54 is also configured to maintain a calendar application 136 within non-volatile storage 112. Processor 108 is configured to execute calendar application 136, receive input from keyboard 100 relative to calendar application 136, and to generate graphical interfaces on display 124 relative to calendar application 136. Device 54 is further configured to maintain at least one database 138 comprising a plurality of data records 140 within non-volatile storage 112 respective to calendar application 136. For convenience, only a single data record 140 is shown in Figure 2. Processor 108 is configured, when executing calendar application 136, to write updates to database 138 that correspond to inputs received via keyboard 100 or pointing device 102 or both. Updates to database 138 can comprise creation, deletion, and changes to data records 140. Processor 108 is further configured, when executing calendar application 136, to read data records 140 as part of generating graphical interfaces on display 124 respective to calendar application 136. It will now be apparent to those of skill in the art that data records 140 each comprise data representative of a calendar appointment.

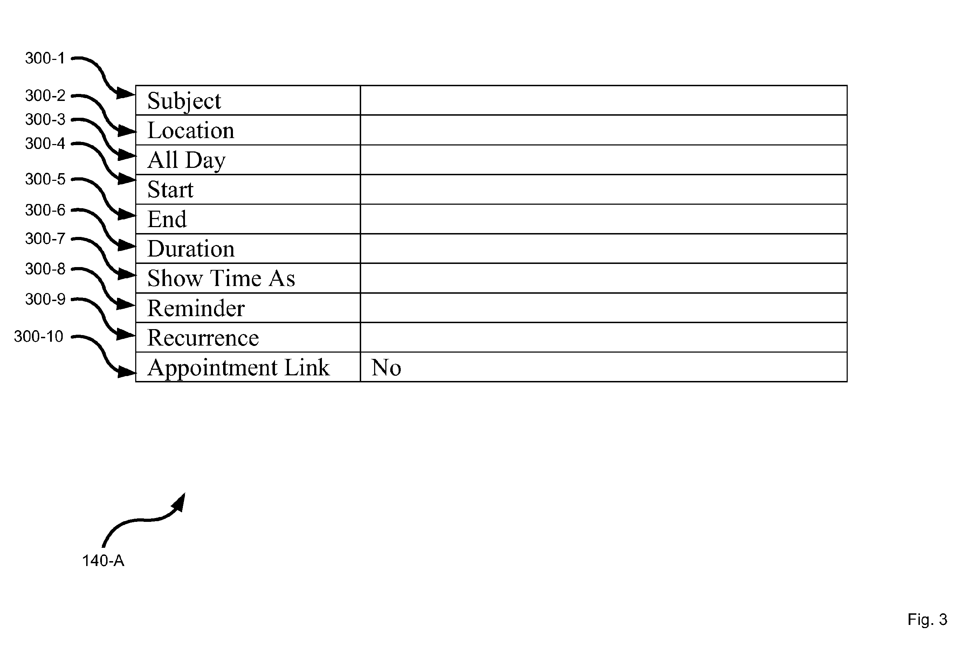

Referring now to Figure 3, an exemplary structure for data record 140 is provided in the form of an empty record 140-A. Data record 140-A comprises a plurality of fields 300-1, 300-2, 300-3, 300-4, 300-5, 300-6, 300-7, 300-8, 300-9 and 300-10. (Generically, field 300 and collectively, fields 300. This nomenclature is used elsewhere herein.) Field 300-1, labeled "Subject", represents the primary identifying information of the calendar appointment. Field 300-2, labeled "Location" represents the particular location at which the calendar appointment will occur. Field 300-3, labeled "All Day" is a flag which indicates whether or not the calendar appointment is to occur over the entire 24 hour period(s) associated with the date(s) of the calendar appointment. If field 300-3 is flagged as "yes", then the aspects of fields 300-4, 300-5, 300-6 that relate to time will become inactive and only date related data, and no time-related data, will be entered for those fields. If, however, if Field 300-3 is flagged as "no", then the aspects of fields 300-4, 300-5, and 300-6 that relate to time will become active and both time and date data will be entered for those fields. Field 300-4, labeled "start" represents data identifying the time, if appropriate, and date that the particular calendar appointment will commence. Field 300-5, labeled "end", represents data identifying the time, if appropriate, and date that the particular calendar appointment will finish. Field 300-6, labeled "duration" represents a data identifying the time the difference between the time and date relative to field 300-5 and field 300-4. (Note that device 54 can be configured, within calendar application 136, to execute a process that verifies that the data in field of 300-5 and field 300-6 correspond and that such a process can be further configured to auto calculate either field of 300-5 or field 300-6 based on the contents of the other.) Field 300-7, labeled "Show time as", represents a flag that can be used to indicate whether the calendar appointment is to indicate that user U is "busy" or "not busy" (or other flag) as desired. Field 300-8, labeled "Reminder", represents a data identifying the duration (e.g., 5, 10, 15 minutes etc...) before the "start" time that the calendar application 136 is to remind the user U of the calendar appointment. Field the 300-9, labeled "Recurrence", represents an indication as to whether or not the calendar appointment has more than one instance. If the calendar appointments has a plurality of instances, then field 300-9 can be used to delineate a pattern for those instances. Field at 300-10, labeled "appointment link", is a flag that represents whether the present calendar appointment is linked to other calendar appointments.

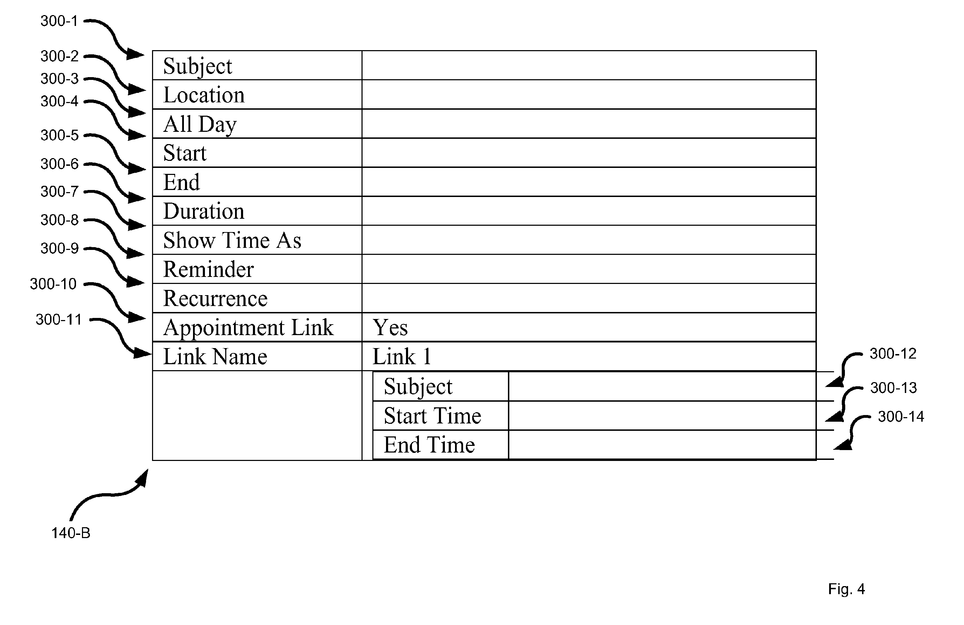

Referring now to Figure 4, record 140-B is shown. Record 140-B is an alternative form of record 140-A, wherein field 300-10 is completed with the flag "yes" instead of the flag "no". Thus, when field 300-10 is completed with the flag "yes" then record 140 takes a slightly different form, as shown in Figure 4. Record of 140-B is an extended version of record 140-A, in that record 140-B includes at least the additional fields 300-11, 300-12, 300-13 and 300-14. Field 300-11, labeled "link name", identifies the name of a specific linked calendar appointment that is linked to the calendar appointment associated with fields 300-1 through 300-9 of record 140-B. Field 300-12, labeled "Subject", identifies the name of the linked calendar appointment. Field 300-13, labeled "Start time", identifies the time that the linked calendar appointment identified in field 300-12 commences. Field 300-14, labeled "End time", identifies the time that the linked calendar of identified in field 300-12 finishes. Those of skill in the art will now recognize that: the format of Field 300-12 can generally correspond to the format of Field 300-1; the format of Field 300-13 can generally correspond to the format of Field 300-4; and the format of Field 300-14 can generally correspond to the format of Field 300-5. It is contemplated that record 140-B can include additional linked calendar appointments whereby fields 300-11 through 300-14 are duplicated for each additional linked calendar appointment.

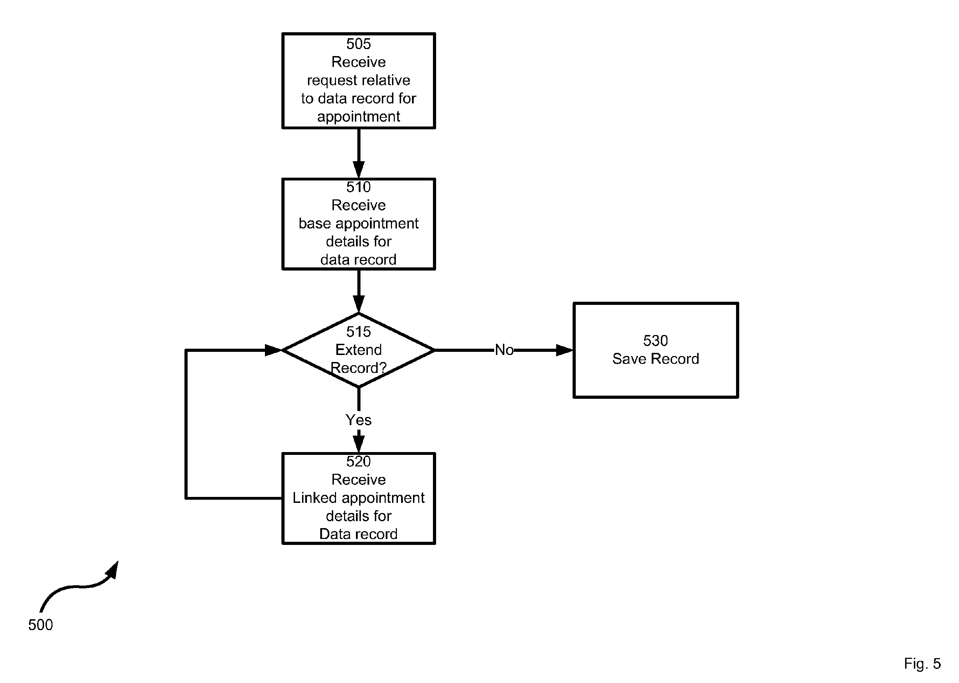

Referring now to Figure 5, a method for data record management is represented in the form of a flowchart and indicated generally at 500. In a present embodiment, method 500 can be performed using device 54 but it is to be understood that variations on method 500 and device 54 are contemplated.

When performed on device 54, it is generally contemplated that calendar application 136 is being executed by processor 108 at the time of invocation of method 500. Indeed, method 500 can be incorporated into calendar application 136.

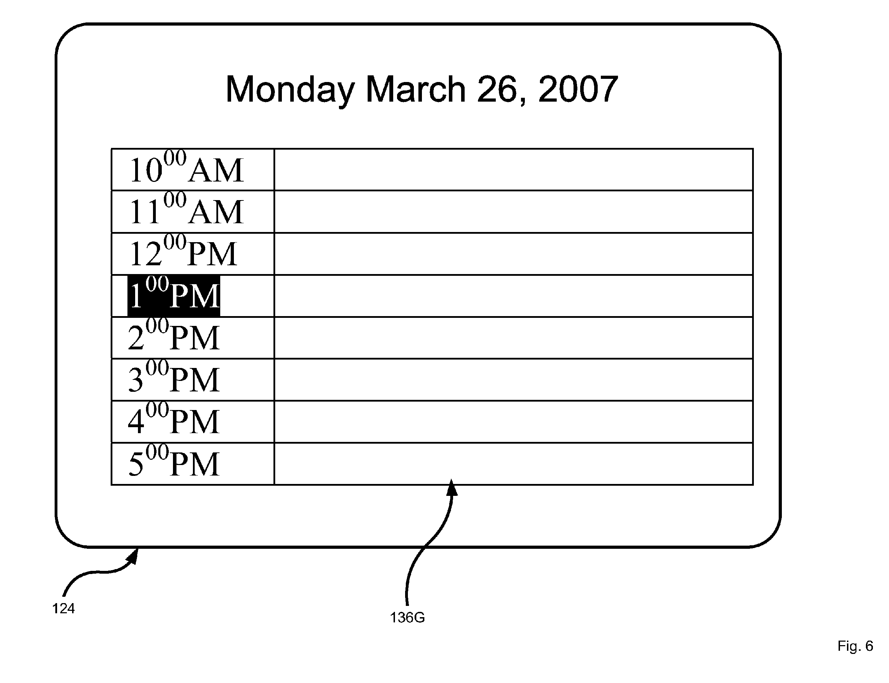

Beginning at block 505, a request is received relative to a data record for a particular calendar appointment. The request can be to create a new calendar appointment or to modify an existing calendar appointment. Such a request can be received at processor 108, via input received from keyboard 100 or pointing device 102 or both. Figure 6 can assist in illustrating how the request at block 505 can be generated. In Figure 6, a graphical interface 136G is shown on display 124. Graphical interface 136G shows an empty calendar for the date Monday, March 26, 2007. Graphical interface 136G can be generated by processor 108 executing calendar application 136 so as to control display 124. The time period of "1:00 p.m." is shown as highlighted on graphical interface 136G. Such highlighting can be effected via pointing device 102 interacting with programming instructions within calendar application 136 that are configured to be responsive to pointing device 102. Further depression of, for example, the "enter" key on the keyboard 100 can ultimately complete performance of block 505. Other means of effecting block 505 will now occur to those of skill in the art.

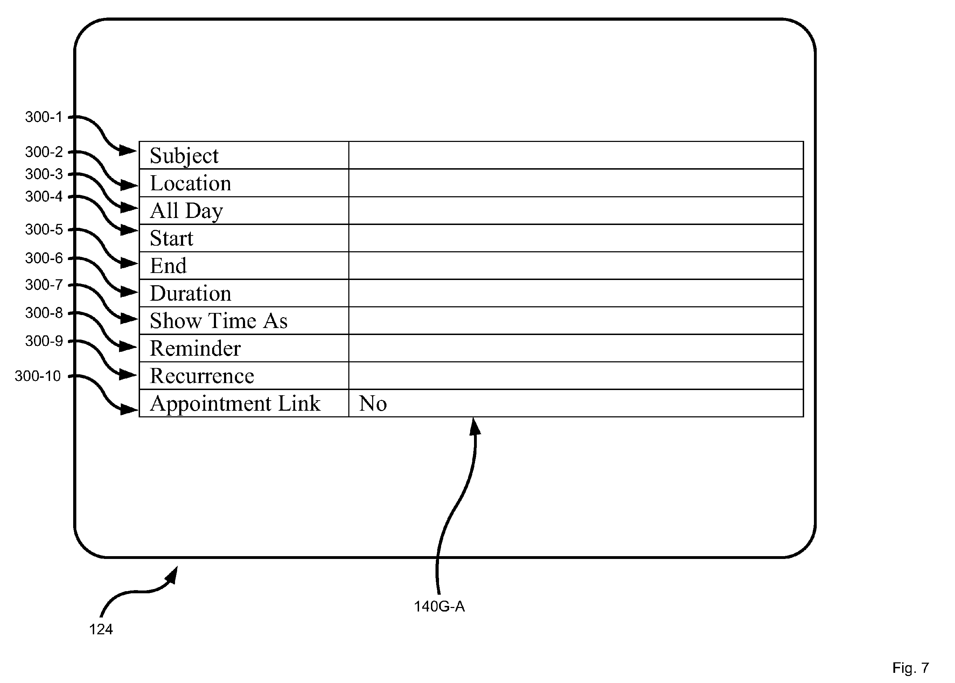

Referring again to Figure 5, at block 510, base appointment details for a data record are received. Figure 7 shows an exemplary graphical interface 140G-A that can be generated on display 124 as display 124 is controlled by processor 108 as part of performance of block 510. Graphical interface 140G-A is responsive to input from keyboard 100 or pointing device 102 or both to receive the inputs contemplated at block 510. (Note that in Figure 7 no exemplary data is entered into fields 300-1 through 300-9; Figure 7 simply represents an exemplary "blank screen".)

At block 515, a determination is made as to whether the data record is to be extended. A "no" determination is made if the flag in field 300-10 is set to "no". If the determination at block 515 is "no" then method 500 advances to block 530 and the completed record 140 is saved in non-volatile storage 112 with only the data that has been in entered into fields 300-1 through 300-9.

However, if the flag in field 300-10 is set to "yes" then method 500 advances to block 520. At block 520, linked appointment details are received in the data record. Linked appointment details correspond to completion of fields 300-12, 300-13 and 300-14.

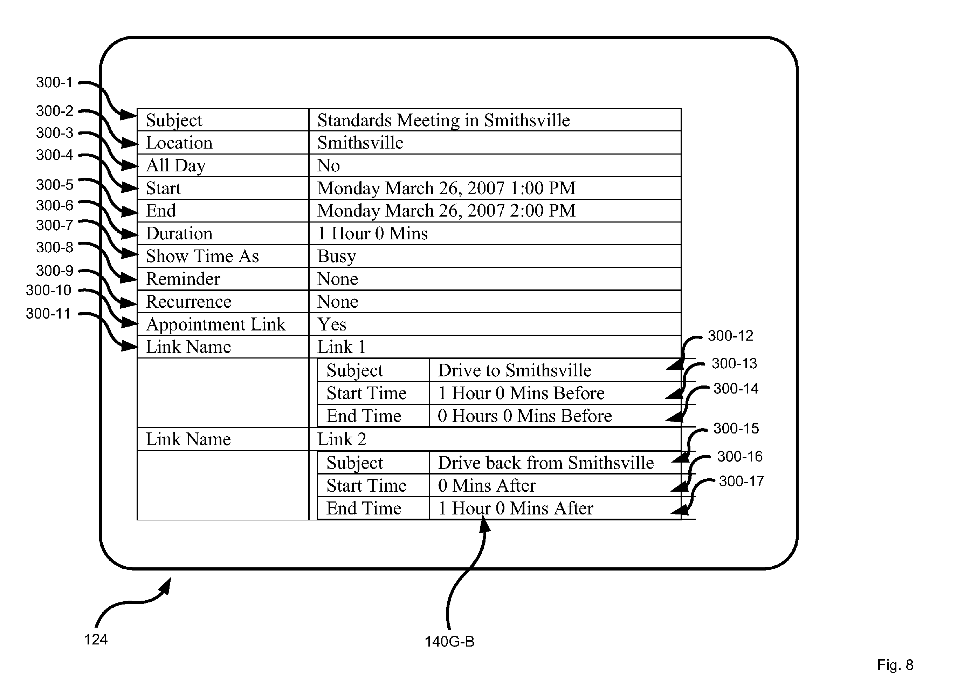

Figure 8 shows an exemplary graphical interface 140G-B that can be generated on display 124 as display 124 is controlled by processor 108 as part of performance of block 520. Graphical interface 140G-B shows graphical interface 140G-A in its completed form as a result of input received from keyboard 100 or pointing device 102 or both, after both block 510 and block 520 have been completed. Graphical interface 140G-B also reflects that a "yes" determination was made twice at block 515, and so that linked appointment details were received for two different linked appointments at block 520. Indeed, fields 300-12 through 300-14 on graphical interface 140G-B reflect the first performance of block 520, and fields 300-15 through 300-17 reflect the second performance of block 520. Note that fields 300-15 though 300-17 are parallel in structure to fields 300-12 through 300-14.

Note, in particular that linked appointment number one, corresponding to fields 300-12 through 300-14 contain: the subject "Drive to Smithsville" in field 300-12; a start time of "1 Hour and 0 minutes Before" in field 300-13; and an end time of "0 hours and 0 minutes Before" in field 300-14. The start time in field 300-13 thus represents that the linked calendar appointment number one will begin one hour prior to the start time indicated in Field 300-4 - in other words that linked appointment number one will begin on Monday March 26, 2007 at 12:00PM. The end time in field 300-14 thus represents that the linked calendar appointment number one will end at the start time indicated in Field 300-4 - in other words that linked appointment number one will end on Monday March 26, 2007 at 1:00PM. Note in a present embodiment that fields 300-13 and 300-14 are expressed in terms that are relative to the contents of field 300-4, although in other embodiments they could be expressed, or maintained, in absolute terms.

Note, also that linked appointment number two, corresponding to fields 300-15 through 300-17 contain: the subject "Drive back from Smithsville" in field 300-15; a start time of "0 minutes After" in field 300-16; and an end time of "1 hour and 0 minutes After" in field 300-17. The start time in field 300-16 thus represents that the linked calendar appointment number two will begin exactly at the end time of indicated in Field 300-5 - in other words, linked appointment number two will begin on Monday March 26, 2007 at 2:00PM. The end time in Field 300-17 thus represents that the linked calendar appointment number two will end one hour after the end time indicated in Field 300-5 - in other words, linked appointment number two will end on Monday March 26, 2007 at 3:00PM. Note in a present embodiment that fields 300-16 and 300-17 are expressed in terms that are relative to the contents of field 300-5, although in other embodiments they could be expressed, or maintained, in absolute terms.

Having completed entry of data into graphical interface 140G-B as shown in Figure 8, and referring again to Figure 5, a determination will be made at block 515 that no further record extensions are to occur and method 500 will advance to block 530. At block 530 data entered into graphical interface 140G-B will be saved as record 140 in non-volatile storage 112.

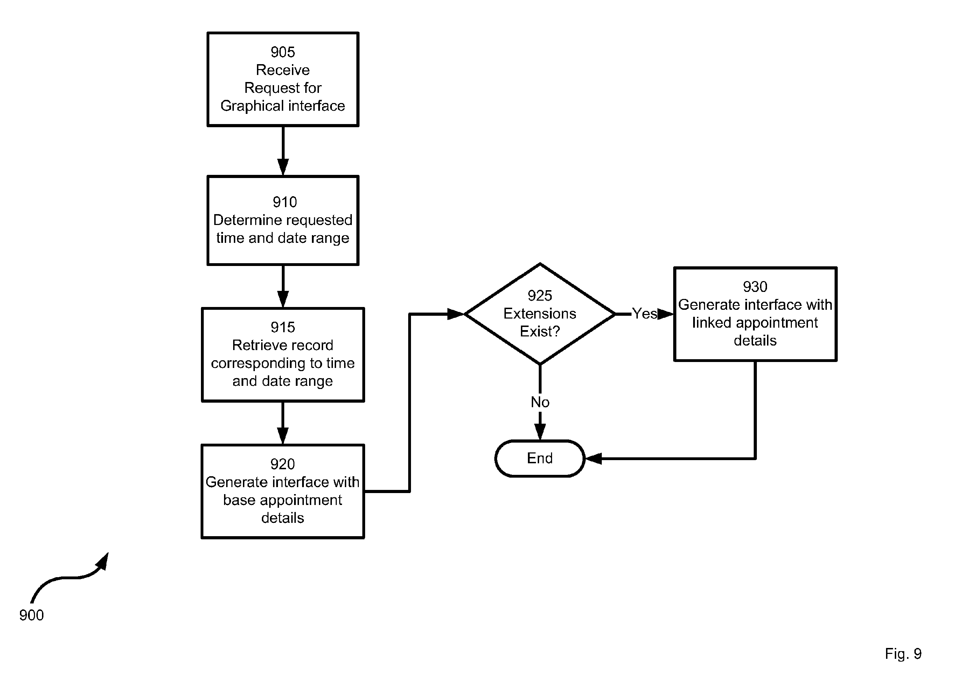

Referring now to Figure 9, a method for generating a graphical interface is presented in the form of a flowchart and indicated generally at 900. To assist in the explanation of method of 900, it will be assumed that method 900 is performed by device 54 and that record 140 contains the data as shown in Figure 8. Method 900 can be a process that is incorporated into calendar application 136.

At block 905 a request is received to generate a graphical interface. In the present example the request will be to generate a graphical interface according to a single day view within calendar application 136. At block 910 a determination is made as to the requested time and date range to be generated on the graphical interface. In the present example, the time and date range will be between 10 a.m. and 5 p.m. on Monday, March 26, 2007. (Note that, the means by which the time and date range are determined is not particularly limited and can be based on, for example, the default time range for a selected date, in this case the selected date being Monday, March 26, 2007.)

At block 915 a record is retrieved corresponding to the time and date range determined at block 910. Continuing with the present example, record 140, which includes the contents from Figure 8, is retrieved from non-volatile storage 112.

At block 920 an interface is generated that includes the base appointments details. In the present example, the base appointments details include the data found within fields 300-1 through 300-9 of Figure 8.

At block 925, a determination is made as to whether extensions exist. The determination at block 925 will be yes if the flag in field 300-10 contains a "yes", and conversely the determination at block 925 will be no if the flag in field 300-10 contains a "no". In the present example, field 300-10 contains "yes", and therefore the determination at block 925 will be yes. At this point method 900 advances to block 930 and the interface is further generated to include linked appointment details. In the present example, the interface will therefore be further generated to include the data in fields 300-12 to field 300-17 as shown in Figure 8.

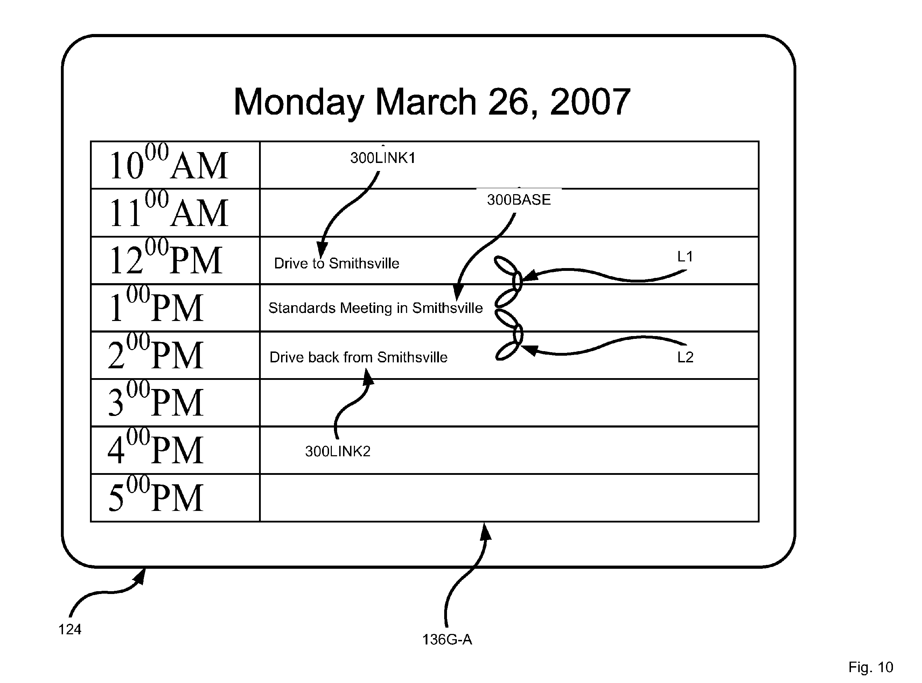

Figure 10 shows an exemplary graphical interface 136G-A that is generated as a result of performing method 900 according to the specific example discussed above. Note that the 1 p.m. to 2 p.m. entry, labeled 300BASE, in interface 136G-A includes the subject "Standards Meeting in Smithsville" and therefore corresponds to the data found in fields 300-1 to 300-9 of record 140. Note that the 12 p.m. to 1 p.m. entry, labeled 300LINK1 includes the subject "Drive to Smithsville" and therefore corresponds to the data found in fields 300-12 through 300-14 of record 140. Note that the 2 p.m. to 3 p.m. entry, labeled 300LINK2 includes the subject "Drive back from Smithsville" and therefore corresponds to the data found in fields 300-15 through 300-17 of record 140. Graphical interface 136G-A further includes a first link icon L1 and a second link icon L2. Link icon L1 represents the fact that the entry 300LINK1 is a first linked appointment that is linked to the entry 300BASE. Link icon L2 represents the fact that the entry 300LINK2 is a second linked appointment that is linked to the entry 300BASE.

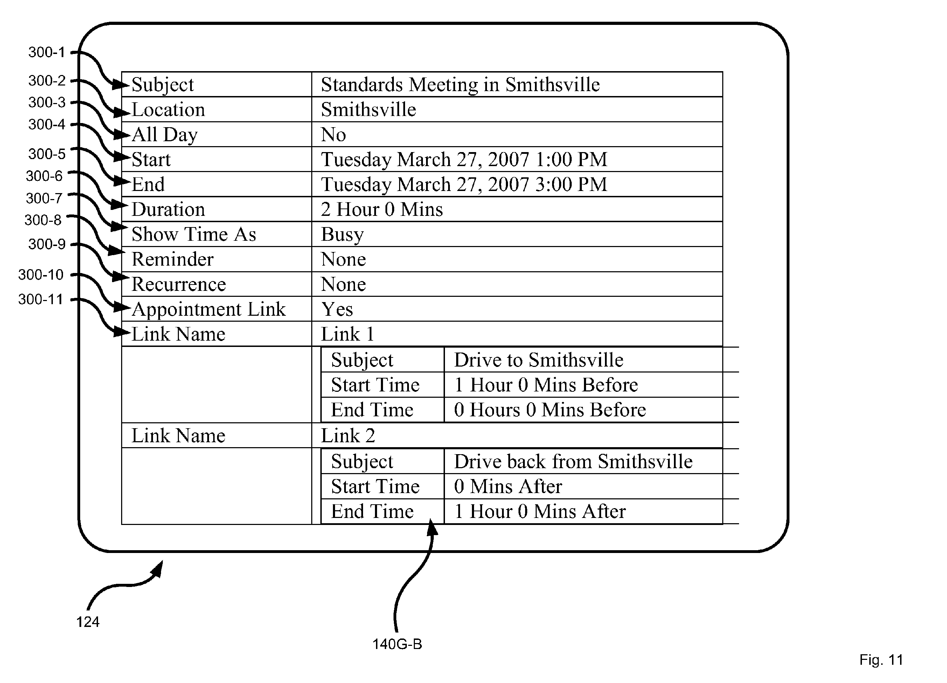

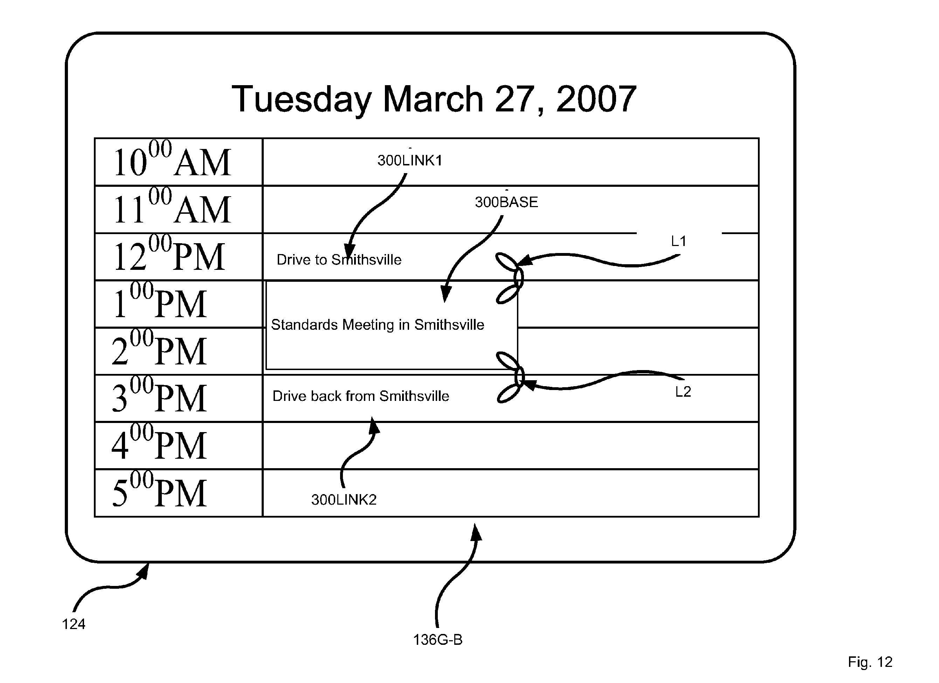

Various advantages will now occur to those of skill in the art. One such advantage becomes apparent from the particular example shown in Figures 11 and 12. Indeed, method 500 can also be used to modify the contents of an existing record 140. Figure 11 shows a graphical interface 140G-B wherein the base appointments details are modified using method 500. In Figure 11, it can be specifically noted that the data in fields 300-4 through 300-6 have been modified. Specifically, the start time of the appointment (i.e. the contents of field 300-4) has been moved from 1 p.m. on Monday March 26, 2007 to 1 p.m. on Tuesday, March 27, 2007. Also in Figure 11 the duration of the appointment (i.e. the contents of field 300-6) has now been set to two hours. The end time of the appointment (i.e. the contents of field at 300-5) has correspondingly been modified. Once record 140 is saved in accordance with the modifications shown in Figure 11, then a subsequent performance of method 900 leads to the generation of the graphical interface in Figure 12. Advantageously, it can be noted that only the base appointments details needed to be modified. No modification of the linked appointment details was needed.

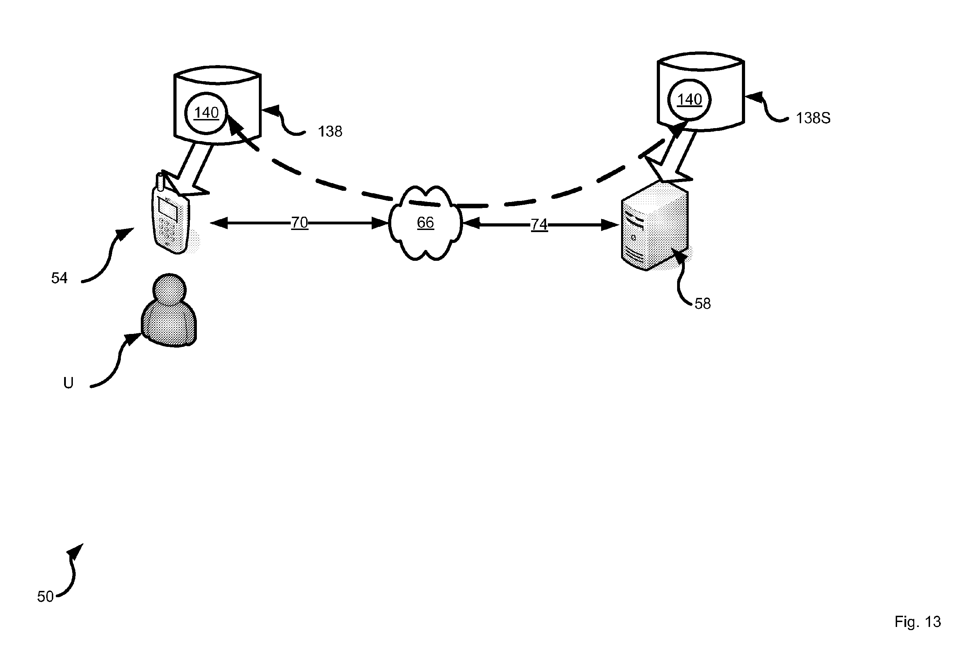

Another advantage becomes apparent from the example shown in Figure 13. In Figure 13, server 58 is configured to maintain a copy of database 138 in the form of a synchronized database 138S. Server 58 can be for example a Microsoft Exchange Server or a Blackberry Enterprise Server or the like. Database 138S can be part of a personal information account that is respective to user U. The structure of record 140 permits the storage of data that can generate interface 136G-A- yet without the structure of record 140, three different records would be maintained. Therefore, using record 140, volatile memory 116 or non-volatile memory 112 or both is used more efficiently, and bandwidth over link 70 or link 74 or both is used more efficiently. In a modified version of system 50, where system 50 is a pure client-server model, and device 54 is simply a client machine that does not persistently maintain record 140 but instead relies on accessing record 140 via server 58 (e.g. via a web browser), then bandwidth over link 70 or link 74 or both is used more efficiently than would be achieved by transferring three different records that do not substantially conform with record the structure of 140, (i.e. three records would be used instead: a first record for entry 300LINK1, a second record for entry 300BASE and a third record for entry 300LINK2) to generate interface 136G-A. Similar bandwidth efficiency is gained during modification of record 140 as shown in Figure 11, as bandwidth is only consumed for modification of record 140, rather than three different records.

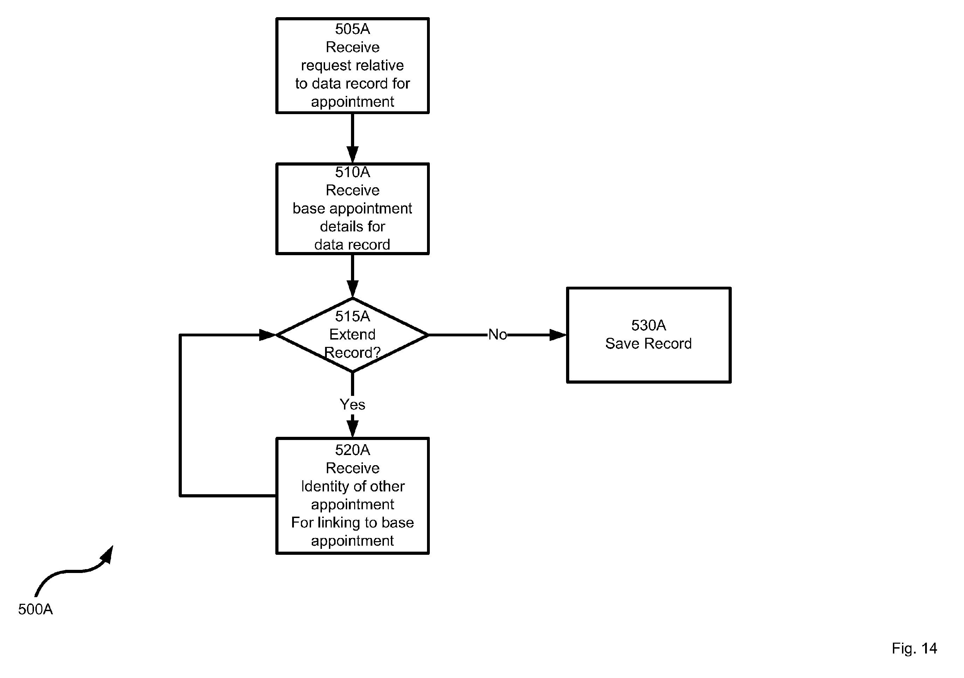

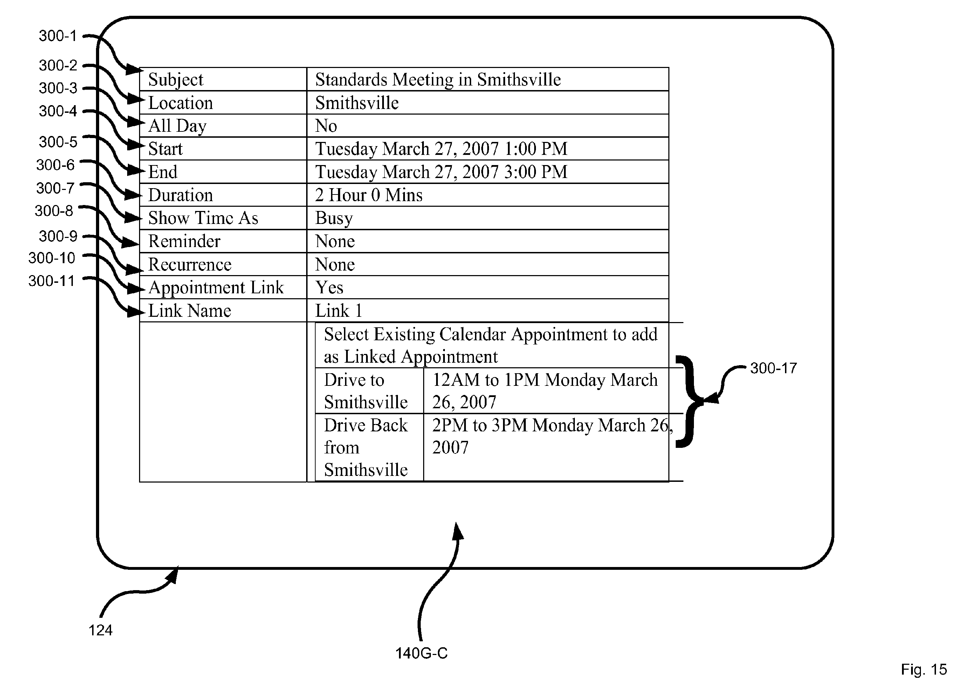

Figure 14 shows a flowchart depicting a method of data record management in accordance with another embodiment and indicated generally at 500A. Method 500A is a variation of method 500 and it can be noted that blocks 505A, 510A, 515A and 530A are the same as blocks 505, 510, 515 and 530. Of note is that block 520A is different from block 520. In block 520A, an identification of another appointment that is to be used for linking is received, instead of actually receiving the linked appointment details. Figure 15 shows a graphical interface 140G-C that can be used to implement method 500A. To implement block 520A, interface 140G-C includes field 300-17. Field 300-17 comprises a drop down menu. The drop down menu lists a plurality of pre-existing appointment records that have been entered in different discrete records whereby the data for those records is entered into the corresponding fields 300-1 through 300-9. By selecting one (or more) of those records listed in Field 300-17, the contents of those other records are converted into the form shown in Figure 8, and those corresponding records are then deleted. Those corresponding records are effectively converted into linked appointments, all having been merged and thereafter maintained within a single data record 140 rather than in multiple separate calendar records.

Variations, combinations or subsets or all of the foregoing of the embodiments are contemplated. For example, it should be understood that the nature of the appointments to be linked is not limited to travel times as shown in the specific examples herein. It can be desired, for example, to link other types of appointments. For example, where a base appointment is a lunch meeting, a linked calendar appointment could be an appointment to remind the user to order lunch for the lunch meeting. As another example, it should be understood that the base calendar appointment can span a number of days or can be a recurring appointment or both, and therefore the linked appointments can likewise span a number of days or can be recurring or both. Where the base appointment details span a number of days such that the linked appointment details may be hidden, then link icons, like link icons L1 or L2, can appear over the base appointment details, and can be active so that, upon selection of those icons, the linked appointment details can be dynamically generated but otherwise remain hidden.

## Claims

1. A method for managing a data record, the method comprising:
receiving a request relative to a data record for an appointment; said request requesting at least one of creating and modifying said data record;
receiving data representing base appointment details for a base appointment for said data record;
receiving data representing linked appointment details for a linked appointment for said data record;
storing said base appointment detail data and said linked appointment detail data in said data record.

2. A method for controlling an electronic device to generate a graphical interface comprising:
receiving a request to generate said graphical interface;
determining a time and date range to be used in generating said graphical interface;
retrieving a data record corresponding to said time and date range; said data record comprising base appointment details for a base appointment and linked appointment details for a linked appointment; and
generating said graphical interface; said graphical interface comprising a representation of said base appointment detail data and said linked appointment detail data.

3. The method according to claim 1 or 2 wherein the data record is stored in a non-volatile storage device.

4. The method according to claims 1 and 3 wherein the non-volatile storage device is located on a client machine, which is preferably an electronic device.

5. The method according to claims 2 and 3 wherein the non-volatile storage device is located on said electronic device.

6. The method according to claim 3 wherein the non-volatile storage device is located on a server.

7. The method according to claim 6 when dependent from claim 1 wherein said receiving steps are performed on a client machine.

8. The method according to claim 2 wherein said data record is stored in a volatile storage device.

9. The method according to any preceding claim wherein said base appointment detail data are stored within said data record in a subject field and within at least one field representing a time associated with an occurrence of said base appointment.

10. The method according to claim 19 wherein said linked appointment detail data are stored within said data record in another subject field and within another at least one field representing a time associated with an occurrence of said linked appointment.

11. The method according to claim 10 wherein said time associated with said occurrence of said linked appointment is stored as a time that is fixed relative to said time associated with said occurrence of said base appointment.

12. An electronic device for performing the steps of the methods of claim 2 or any of claims 2 to 6 and 8 to 12 when dependent from claim 2, the device comprising:
an input device configured to receive said request to generate a graphical interface;
a processor connected to said input device and configured to receive said request; said processor further configured to determine a time and date range to be used in generating said graphical interface;
said processor further configured to retrieve said data record corresponding to said time and date range; said data record comprising base appointment details and linked appointment details; and
a display configured to generate said graphical interface; said display connected to said processor; said processor configured to control said display to generate said graphical interface; said graphical interface comprising a representation of said base appointment details and said linked appointment details.

13. The electronic device of claim 12 further comprising an interface connected to said processor; said interface configured to connect said electronic device to a server via a network; said server configured to maintain said data record.

14. The electronic device of claim 12 or 13 further comprising non-volatile storage connected to said processor; said non-volatile storage configured to maintain said data record.

15. A computer readable storage medium containing a plurality of programming instructions executable on a computing device; said programming instructions implementing a method for controlling a display on said computing device; said method comprising all of the steps of claim 2 or any of claims 2 to 6 and 8 to 12 when dependent from claim 2.

## Amended claims

### Amended claims in accordance with Rule 137(2) EPC.

**1.** A method for managing a data record, the method comprising:
receiving a request relative to a data record for an appointment; said request requesting at least one of creating and modifying said data record; said data record comprising a first plurality of fields and a second plurality of fields;
receiving data representing base appointment details for a base appointment for said data record; said base appointment detail data comprising data identifying a time associated with an occurrence of said base appointment;
receiving data representing linked appointment details for a linked appointment for said data record; said linked appointment detail data comprising data identifying a time associated with an occurrence of said linked appointment;
storing said base appointment detail data within said first plurality of fields, and storing said linked appointment detail data within said second plurality of fields.

**2.** The method according to claim 1 wherein the data record is stored in a non-volatile storage device.

**3.** The method according to claim 2 wherein the non-volatile storage device is located on a client machine, which is preferably an electronic device.

**4.** The method according to claim 3 wherein the client machine is an electronic device.

**5.** The method according to claim 2 wherein the non-volatile storage device is located on a server.

**6.** The method according to claim 5, wherein said receiving steps are performed on a client machine.

**7.** The method according to claim 1 wherein said data record is stored in a volatile storage device.

**8.** The method according to any preceding claim wherein said base appointment detail data further comprises data representing primary identifying information for said base appointment, said data representing primary identifying information being stored within a first subject field of said first plurality of fields.

**9.** The method according to claim 8 wherein said linked appointment detail data further comprises data representing a name of said linked appointment, said data representing a name being stored within a second subject field of said second plurality of fields.

**10.** The method according to claim 9 wherein said time associated with said occurrence of said linked appointment is stored as a time that is fixed relative to said time associated with said occurrence of said base appointment.

**11.** An electronic device comprising:
at least one input device for receiving a request relative to a data record for an appointment;
a storage device connected to said at least one input device for storing said data record;
a processor connected to said at least one input device and said storage device, said processor configured to execute computer readable programming instructions stored on a computer readable medium for causing said electronic device to implement the steps of the method of any one of claims 1 to 10.
